# EUROPEAN PATENT APPLICATION

(11) **EP 4 811 515 A1**
(43) Date of publication of application: **23.09.2026**
(21) Application number: 24921365.3
(22) Date of filing: 09.08.2024
(51) Int. Cl.: H01M 50/24

(54) **BATTERY CASE, BATTERY AND ELECTRICAL DEVICE**

(30) Priority: 01.02.2024 CN 202410145572
(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); ZHANG, Wei, Ningde, Fujian 352100 (CN); ZHANG, Wenhui, Ningde, Fujian 352100 (CN); WANG, Peng, Ningde, Fujian 352100 (CN)
(74) Representative: Lorenz Seidler Gossel Part. mbB
(86) International application number: PCT/CN2024/111172
(87) International publication number: WO 2025/161336

(57) **Abstract**

A battery case (100), a battery (1000) and an electrical device. The battery case (100) comprises a frame (10); a thermal management plate (20) welded to the frame (10), the thermal management plate and the frame (10) enclosing an accommodating space (101), wherein a heat exchange flow channel (201) for a heat exchange medium to flow is provided in the thermal management plate (20), and the heat exchange flow channel (201) comprises a water intake/output portion (2011); and a current collector (30) fixedly connected to the thermal management plate (20) and arranged on an outer side of the accommodating space (101), wherein a converging flow channel (321) in communication with the water intake/output portion (2011) is arranged in the current collector (30), and the current collector (30) is welded to the frame (10). A first welding mark (40) is formed between the thermal management plate (20) and the frame (10), a second welding mark (50) is formed between the current collector and the frame (10), and the first welding mark (40) is connected to the second welding mark (50). In the battery case (100), the thermal management plate (20) and the current collector (30) are separately welded to the frame (10), and thus the battery case (100) has relatively good sealing reliability.

## Description

The present application claims priority to Chinese Patent Application No. 202410145572.2, filed with the China National Intellectual Property Administration on February 01, 2024, entitled "Battery Case, Battery and Electrical Device", the entire content of which is incorporated herein by reference.

### TECHNICAL FIELD

The present application relates to the technical field of batteries, and in particular, to a battery case, a battery and an electrical device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

A thermal management plate in a battery is configured to circulate a heat exchange medium, to adjust a temperature of the battery. The thermal management plate is provided with a water inlet/outlet portion, and since the thermal management plate is of a hollow structure at the water inlet/outlet portion, the thermal management plate cannot be directly welded to a frame of the battery case, and the water inlet/outlet portion of the thermal management plate and the frame usually need to be connected by bolts, and the sealing reliability of the battery case needs to be improved.

### SUMMARY

In view of this, embodiments of the present application provide a battery case, a battery, and an electrical device, to effectively improve the reliability of the battery case.

An embodiment in a first aspect of the present application provides a battery case, including: a frame; a thermal management plate welded to the frame welded to the frame, the thermal management plate and the frame enclosing an accommodating space with the frame, where a heat exchange flow channel for a heat exchange medium to flow is disposed in the thermal management plate, and the heat exchange flow channel includes a water inlet/outlet portion; a current collector fixedly connected to the thermal management plate and disposed on an outer side of the accommodating space, where a converging flow channel in communication with the water inlet/outlet portion is disposed in the current collector, and the current collector is welded to the frame; where a first welding mark is formed between the thermal management plate and the frame, a second welding mark is formed between the current collector and the frame, and the first welding mark is connected to the second welding mark.

The battery case provided by the embodiment of the present application includes the frame, the thermal management plate and the current collector, where the current collector is fixedly connected to the thermal management plate and welded to the frame, such that a water inlet/outlet area where the water inlet/outlet portion of the thermal management plate is located is not directly welded to the frame, but is hermetically connected to the frame through the current collector, and the remaining area of the thermal management plate is directly welded to the frame. Due to the connection of the first welding mark between the thermal management plate and the frame and the second welding mark between the current collector and the frame, a sealed connection between the entire thermal management plate and the frame is realized, and the sealing reliability of the battery case is improved. In addition, since the current collector is located outside the accommodating space, the leaked heat exchange medium can be prevented from flowing into the accommodating space due to the leakage of the heat exchange medium in the current collector, thereby enhancing the safety and reliability of the battery.

In some embodiments, the current collector includes two flange portions and a current collecting portion disposed between the two flange portions, the converging flow channel is disposed in the current collecting portion, and the two flange portions are both attached to and welded to the frame.

By adopting the above technical solution, the current collecting portion in the current collector can be in communication with the thermal management plate, and each of the flange portions can facilitate welding of the current collector to the frame, and the structure of the current collector can simultaneously meet the requirements for the inlet and outlet of heat exchange medium and welding, featuring an ingenious and practical design.

In some embodiments, the frame is provided with a mounting groove, the current collecting portion is disposed in the mounting groove, and each of the flange portions is disposed in the mounting groove or on an outer side of the frame away from the accommodating space.

By adopting the above technical solution, the current collecting portion is disposed in the mounting groove of the frame, such that the current collecting portion can be disposed outside the accommodating space, thereby avoiding the influence of the leakage of the heat exchange medium on the battery cell. Each of the flange portions may be disposed in the mounting groove or on the outer side of the frame, and both may realize overlapping of each of the flange portions and the frame, so as to perform welding at an interface between each of the flange portions and the frame.

In some embodiments, the frame includes a first frame beam extending in a first direction and a second frame beam extending in a second direction, the first direction intersects with the second direction, the first frame beam is connected to the second frame beam, the mounting groove is disposed in the first frame beam, and the first frame beam includes a top surface and an outer side surface; and a part of the first welding mark is located between the thermal management plate and the top surface, and the second welding mark is located between the current collector and the outer side surface.

By adopting the above technical solution, the thermal management plate is welded to the top of the first frame beam and the top of the second frame beam, and the current collector is welded to the outer side surface of the first frame beam in the water inlet/outlet area of the thermal management plate, such that the welding mark avoids the water inlet/outlet flow channels of the thermal management plate, and the sealed connection between the thermal management plate and the frame is realized.

In some embodiments, the second welding mark extends continuously along one of the flange portions, the current collecting portion, and the other one of the flange portions, and the first welding mark and the second welding mark enclose a closed welding mark along the frame.

By adopting the above technical solution, the current collecting portion and each of the flange portions are both welded to the frame, the thermal management plate and the current collector are respectively welded to the frame and enclose a closed welding mark, and the battery case has good sealing performance.

In some embodiments, the thermal management plate includes a main body portion and a protruding portion protruding from one side of the main body portion, the main body portion covers the frame, the protruding portion is attached to the first frame beam, and the current collector is disposed on the protruding portion; the water inlet/outlet portion is located in the protruding portion, and the current collector is fixedly connected to the protruding portion; and in the first direction, each of the flange portions is flush with an edge of the protruding portion or the flange portions exceed the edge of the protruding portion.

By disposed the protruding portion on the thermal management plate, the current collector can be mounted by using the protruding portion. By setting each of the flange portions to be flush with the edge of the protruding portion or each of the flange portions to exceed the edge of the protruding portion, it is convenient to realize the connection between the first welding mark and the second welding mark to form a closed welding mark.

In some embodiments, the mounting groove includes a first groove and two second grooves that are in communication with each other, and the first groove is disposed between the two second grooves; the current collecting portion is disposed in the first groove; and each of the flange portions is disposed in the second groove.

By adopting the above technical solution, the mounting groove can accommodate the current collector, without affecting the connection between the current collector and the thermal management plate and the connection between the current collector and an external heat exchange medium source.

In some embodiments, a side of each of the flange portions close to the accommodating space is provided with a limiting surface, and the limiting surface is attached to a groove wall of the second groove close to the accommodating space.

In the embodiment of the present application, the limiting surface of each of the flange portions is attached to the groove wall of the second groove, such that the current collector can be aligned with the frame, and the thermal management plate can be aligned with the frame.

In some implementations, a weight reduction hole is formed in the current collector. By adopting the above technical solution, the weight of the current collector can be reduced on the basis of welding the current collector and the frame, which is beneficial to reduce the weight of the entire battery case.

In some embodiments, the current collector is provided with a bonding surface in a height direction of the battery case, and the bonding surface is bonded and welded to the thermal management plate.

In the embodiment of the present application, the current collector is attached and welded to the thermal management plate through the bonding surface, which can improve the sealing performance between the current collector and the thermal management plate, and avoid the leakage of the heat exchange medium from a position between the bonding surface and the thermal management plate. The welding process is simple, which facilitates manufacturing.

In some embodiments, two converging flow channels are disposed in the current collector at intervals, and the current collector is further provided with a first inlet and a first outlet; and the thermal management plate is provided with a second inlet and a second outlet, the first inlet, one of the converging flow channels, and the second inlet are in communication sequentially, and the second outlet, the other one of the converging flow channels, and the second outlet are in communication sequentially.

The current collector provided by the embodiment of the present application integrates two converging flow channels, which can realize the inflow and outflow of the heat exchange medium at the same time, and compared with the manner of separately disposing a feeding current collector and a discharging current collector, the number of parts is reduced, such that the welding difficulty is reduced.

In some embodiments, the current collector is provided with a liquid inlet pipe and a liquid outlet pipe in a protruding manner, the liquid inlet pipe is in communication with the first inlet through one of the converging flow channels, and the liquid outlet pipe is in communication with the first outlet through the other one of the converging flow channels; and the liquid inlet pipe is inserted into the second inlet, and the liquid outlet pipe is inserted into the second outlet.

By adopting the above technical solution, the thermal management plate is aligned with the current collector by using the protruding pipe body, which improves the alignment accuracy between the thermal management plate and the current collector, thereby further reducing the risk of heat exchange medium leakage.

In some embodiments, an arrangement direction of the first inlet and the first outlet is parallel to a length direction, a width direction, or a height direction of the frame.

The inlet, the outlet, and the converging flow channel may be flexibly designed for the current collector in the embodiment of the present application based on an installation space, to meet requirements of different frames, and the design manner is flexible and easy to implement.

In some embodiments, each of the converging flow channels includes a first flow channel portion and a second flow channel portion that are in communication with each other, the first flow channel portion is parallel to the thermal management plate, and the second flow channel portion intersects with the thermal management plate.

The converging flow channel in this embodiment of the present application includes two flow channel portions that are connected in a bent manner and that are in communication with each other, such that drainage can be implemented in a relatively small space, and a structure is ingenious.

In some embodiments, the thermal management plate includes a first plate and a second plate that are stacked and welded to each other, a flow channel groove is formed in a surface of the second plate facing the first plate, the flow channel groove and the first plate jointly form the heat exchange flow channel, the first plate is welded to the frame, and the current collector is fixedly connected to a side of the first plate away from the second plate.

The thermal management board provided in this embodiment of the present application forms a sealed cavity and a flow channel by using the first plate and the second plate, to facilitate a heat exchange medium to flow in the thermal management plate. The current collector is connected to the first plate, which facilitates fixation of the current collector to the thermal management plate and welding of the current collector to the frame.

In some embodiments, a thickness of the current collector is greater than a thickness of the first plate. By setting the thickness of the current collector to be greater than the thickness of the first plate, the current collector can be used to form a sufficient penetration depth, so as to avoid the welding from affecting the heat exchange flow channel in the thermal management plate.

An embodiment in a second aspect of the present application provides a battery, including the battery case provided in the first aspect and a battery cell accommodated in the battery case.

An embodiment in a third aspect of the present application provides an electrical device, including the battery provided in the second aspect.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

To more clearly illustrate the technical solutions in the embodiments of the present application, the accompanying drawings required for describing the embodiments or conventional technologies will be briefly introduced below. Obviously, the accompanying drawings described below are only some embodiments of the present application, and those of ordinary skill in the art can also obtain other accompanying drawings based on these drawings without exerting creative labor.
FIG. 1 is a schematic structural diagram of a vehicle according to some embodiments of the present application;
FIG. 2 is an exploded schematic view of a battery according to some embodiments of the present application;
FIG. 3 is an exploded perspective view of a battery according to some embodiments of the present application;
FIG. 4 is a partially enlarged view of a portion A in a battery shown in FIG. 3.
FIG. 5 is a three-dimensional schematic diagram of a battery case according to in some embodiments of the present application;
FIG. 6 is an exploded perspective view of a battery case shown in FIG. 5;
FIG. 7 is a partially enlarged view of a portion B in the battery case shown in FIG. 6;
FIG. 8 is a schematic structural diagram of a thermal management plate and a current collector in the battery case shown in FIG. 6;
FIG. 9 is a top view of the battery case shown in FIG. 5;
FIG. 10 is a partially enlarged view of a portion C in the battery case shown in FIG. 9;
FIG. 11 is a cross-sectional view of the battery case shown in FIG. 9 along a line D-D;
FIG. 12 is a partially enlarged view of a portion E in the battery case shown in FIG. 11;
FIG. 13 is a side view of the battery case shown in FIG. 5;
FIG. 14 is a partially enlarged view of a portion F in the battery case shown in FIG. 13;
FIG. 15 is a three-dimensional schematic diagram of a current collector according to an embodiment of the present application;
FIG. 16 is a three-dimensional schematic diagram of the current collector shown in FIG. 15 from another perspective;
FIG. 17 is a top view of the current collector shown in FIG. 15;
FIG. 18 is a cross-sectional view of the current collector shown in FIG. 17;
FIG. 19 is a three-dimensional schematic diagram of a current collector according to some embodiments of the present application;
FIG. 20 is a side view of the current collector shown in FIG. 19;
FIG. 21 is a top view of the current collector shown in FIG. 19; and
FIG. 22 is a cross-sectional view of the current collector shown in FIG. 21 along a line H-H.

Symbols in the figures have the following meanings:
5000, vehicle; 1000, battery; 2000, controller; 3000, motor; 100, battery case; 110, first portion; 120, second portion; 10, frame; 101, accommodating space; 11, first frame beam; 111, mounting groove; 1111, first groove; 1112, second groove; 112, top surface; 113, side surface; 12, second frame beam; 20, thermal management plate; 201, heat exchange flow channel; 2011, water inlet/outlet portion; 20a, main body portion; 20b, protruding portion; 21, first plate; 211, second inlet; 212, second outlet; 22, second plate; 221, flow channel groove; 30, current collector; 31, flange portion; 311, limiting surface; 32, current collecting portion; 321, converging flow channel; 3211, first flow channel portion; 3212, second flow channel portion; 322, bonding surface; 3221, liquid inlet pipe; 3222, liquid outlet pipe; 323, first inlet; 324, first outlet; 325, weight reduction hole; 40, first welding mark; 50, second welding mark; and 200, battery cell.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, the orientation or positional relationships indicated by technical terms such as "center", "longitudinal", "transverse", "length", "width", "thickness", "upper", "lower", "front", "rear", "vertical", "horizontal", "top", "bottom", "inner", and "outer" are based on the orientation or positional relationships shown in the accompanying drawings. These terms are only used to facilitate the description of the embodiments of the present application and simplify the description, and do not indicate or imply that the referred device or element must have a specific orientation, be constructed and operated in a specific orientation. Therefore, they shall not be construed as limitations on the embodiments of the present application.

In the description of the embodiments of the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an internal communication between two elements or interaction between two elements. A person of ordinary skill in the art may understand the specific meanings of the above terms in the embodiments of the present application according to specific situations.

A thermal management plate in a battery is configured to circulate a heat exchange medium, to adjust a temperature of the battery. The thermal management plate is provided with a water inlet/outlet portion, and since the thermal management plate is of a hollow structure at the water inlet/outlet portion, the thermal management plate cannot be directly welded to a frame of the battery case, and the water inlet/outlet portion of the thermal management plate and the frame usually need to be connected by bolts, and the sealing reliability of the battery case needs to be improved.

It is found through research that, in a manner of connecting the thermal management plate and the frame by bolts, a sealant and/or a sealing gasket need to be added to achieve sealing of a connection area, such that consistency of the glue is difficult to control, and a sealing failure is likely to occur. In addition, the sealant is interposed at the bolt connection interface, and under long-term use conditions (mainly mechanical conditions and temperature conditions), the bolts are prone to torque attenuation, which may also cause the sealing performance between the thermal management plate and the frame to become poor.

In order to solve the above problems, the present application provides a battery case, a battery and an electrical device. The battery case includes a frame, a thermal management plate and a current collector, the thermal management plate is welded to the frame and encloses an accommodating space with the frame, and a heat exchange flow channel for a heat exchange medium to flow is disposed in the thermal management plate; the current collector is fixedly connected to the thermal management plate and is disposed on an outer side of the accommodating space, a converging flow channel in communication with the heat exchange flow channel is disposed in the current collector, and the current collector is welded to the frame.

In the battery case provided by the embodiment of the present application, the current collector is fixedly connected to the thermal management plate and welded to the frame, such that the water inlet/outlet area where the water inlet/outlet portion of the thermal management plate is located does not need to be directly welded to the frame, but is hermetically connected to the frame through the current collector, and the remaining area of the thermal management plate is directly welded to the frame. Due to the connection of the first welding mark between the thermal management plate and the frame and the second welding mark between the current collector and the frame, a sealed connection between the entire thermal management plate and the frame is realized, and the sealing reliability of the battery case is improved. The above battery case realizes the connection of the thermal management plate and the frame by welding, without the need to dispose parts such as bolts, sealants, and gaskets, which reduces the number of parts and reduces the manufacturing cost, and the battery case also solves the problem of torque attenuation of the bolts under long-term use conditions, further improving the sealing reliability of the battery case. In addition, since the current collector is located outside the accommodating space, the leaked heat exchange medium can be prevented from flowing into the accommodating space due to the leakage of the heat exchange medium in the current collector, thereby enhancing the safety and reliability of the battery.

Provided in the embodiments of this application is an electrical device using a battery as a power source. The electrical device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electrical device in an embodiment of the present application is a vehicle 5000.

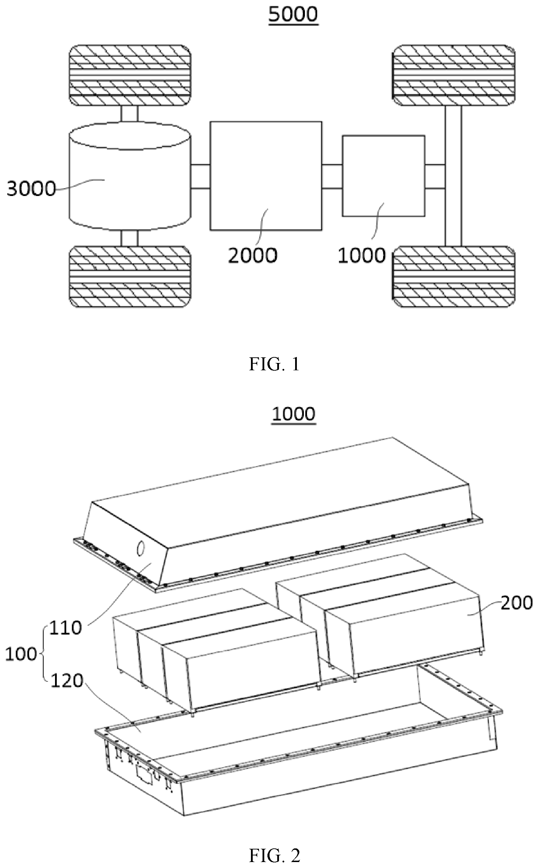

Referring to FIG. 1, FIG. 1 is a schematic structural diagram of a vehicle 5000 according to some embodiments of the present application. The vehicle 5000 may be a fuel vehicle, a gas vehicle, or a new energy vehicle, and the new energy vehicle may be a battery electric vehicle, a hybrid vehicle, or a range-extended electric vehicle. Inside the vehicle 5000, a battery 1000 is disposed, which may be disposed at the bottom, head, or tail of the vehicle 5000. The battery 1000 may be configured to power the vehicle 5000, for example, the battery 1000 may be used as an operating power source of the vehicle 5000. The vehicle 5000 may further include a controller 2000 and a motor 3000, where the controller 2000 is configured to control the battery 1000 to power the motor 3000, for example, for a working power requirement of the vehicle 5000 during starting, navigating, and driving.

In some embodiments of the present application, the battery 1000 may be used not only as the operating power source of the vehicle 5000, but also as a driving power source of the vehicle 5000, instead of or partially instead of fuel or natural gas to provide driving power to the vehicle 5000.

Referring to FIG. 2, FIG.2 is an exploded view of a battery 1000 according to some embodiments of the present application. In some embodiments, the battery 1000 includes a battery case 100 and a battery cell 200. The battery cell 200 is accommodated in the battery case 100.

The battery case 100 is configured to provide an accommodating space for the battery cell 200, and the battery case 100 may have various structures. In some embodiments, the battery case 100 may include a first portion 110 and a second portion 120, where the first portion 110 and the second portion 120 fit each other to define an accommodating space for accommodating the battery cell 200. The second portion 120 may be of a hollow structure with an opening at one end, the first portion 110 may be of a plate-shaped structure, and the first portion 110 covers an opening side of the second portion 120, such that the first portion 110 and the second portion 120 jointly define the accommodating space. The first portion 110 and the second portion 120 may each be of a hollow structure with an opening in one side, with the opening side of the first portion 110 covering the opening side of the second portion 120. Certainly, the battery case 100 formed by the first portion 110 and the second portion 120 may be in various shapes such as a cylinder and a cuboid.

In the battery 1000, a plurality of battery cells 200 may be disposed, and the plurality of battery cells 200 may be subjected to series connection, parallel connection, or series-parallel connection. The series-parallel connection means that the plurality of battery cells 200 are subjected to both series connection and parallel connection. The plurality of battery cells 200 may be directly connected in series, in parallel, or in a combination of both, and the whole of the plurality of battery cells 200 is accommodated in the battery case 100. Certainly, the battery 1000 may also in a form of a battery module formed by the plurality of battery cells 200 subjected to series connection, or parallel connection, or series-parallel connection, and a plurality of battery modules are integrated by series connection, parallel connection, or series-parallel connection, and accommodated in the battery case 100. The battery 1000 may further include other structures. For example, the battery 1000 may further include a busbar component for implementing electrical connections among the plurality of battery cells 200.

Each battery cell 200 may be a secondary battery or a primary battery. Each battery cell may also be a lithium-sulfur battery, a sodium-ion battery, or a magnesium-ion battery, but is not limited thereto. The battery cell 200 may be in the shape of a cylinder, a flat body, a cuboid, or the like.

The battery cell 200 includes an electrode assembly and an electrolyte. The electrode assembly includes a positive electrode sheet and a negative electrode sheet. Working of the battery cell mainly relies on migration of metal ions between the positive electrode sheet and the negative electrode sheet. The positive electrode sheet includes a positive electrode current collector and a positive electrode active material layer. The positive electrode active material layer is coated on the surface of the positive electrode current collector. The positive electrode current collector not coated with the positive electrode active material layer protrudes from the positive electrode current collector coated with the positive electrode active material layer, and the positive electrode current collector not coated with the positive electrode active material layer is a positive electrode tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is coated on a surface of the negative electrode current collector. The negative electrode current collector not coated with the negative electrode active substance layer protrudes from the negative electrode current collector coated with the negative electrode active substance layer, and the negative electrode current collector not coated with the negative electrode active substance layer is a negative electrode tab. The negative electrode current collector may be made of copper, and the negative electrode active substance may be carbon, silicon, or the like. To ensure that a large current passes through without any fusing, a plurality of positive electrode tabs are provided and stacked together, and a plurality of negative electrode tabs are provided and stacked together.

The electrode assembly may also include a separator. The separator may be made of polypropylene (PP), polyethylene (PE), or the like.

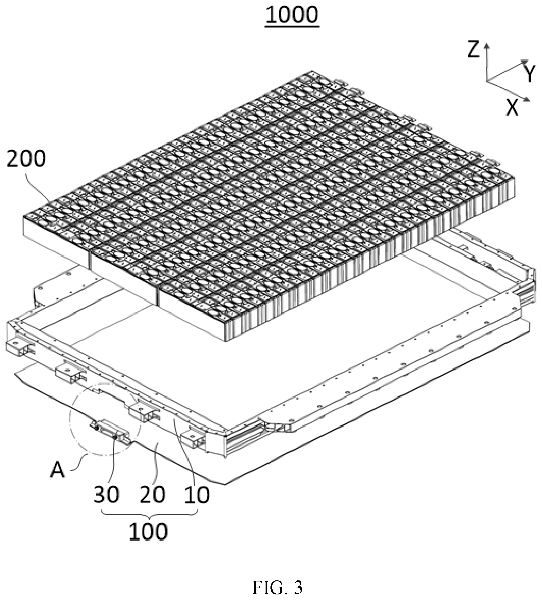

A detailed description will be made below on the battery 1000 shown in FIG. 3. The battery 1000 includes a battery case 100 and a battery cell 200.

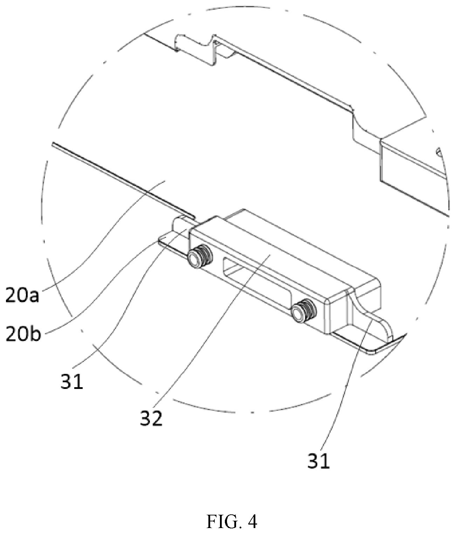

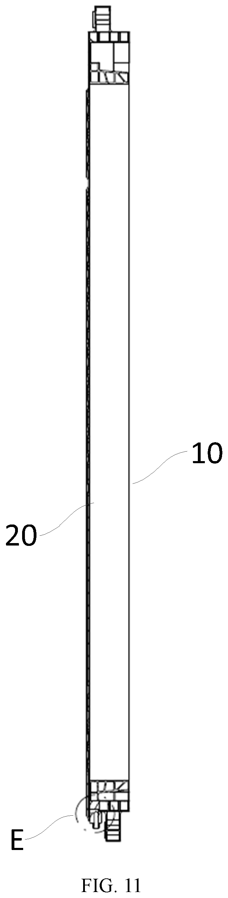

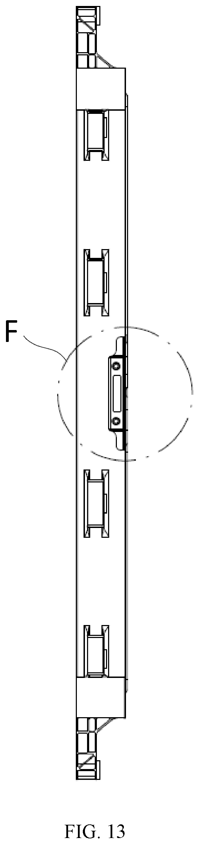

Referring to FIG. 3 to FIG. 14, the battery case 100 includes a frame 10, a thermal management plate 20 and a current collector 30, where the thermal management plate 20 is welded to the frame 10 and encloses an accommodating space 101 with the frame 10, a heat exchange flow channel 201 for a heat exchange medium to flow is disposed in the thermal management plate 20, and the heat exchange flow channel 201 includes a water inlet/outlet portion 2011; the current collector 30 is fixedly connected to the thermal management plate 20 and is disposed on an outer side of the accommodating space 101, a converging flow channel 321 in communication with the water inlet/outlet portion 2011 is disposed in the current collector 30, and the current collector 30 is welded to the frame 10. A first welding mark 40 is formed between the thermal management plate 20 and the frame 10, a second welding mark 50 is formed between the current collector 30 and the frame 10, and the first welding mark 40 is connected to the second welding mark 50.

The frame 10 and the thermal management plate 20 may be connected to form a first portion 110 or a second portion 120. The frame 10 defines an accommodating cavity for accommodating the battery cell 200, the accommodating cavity is provided with two openings formed opposite to each other, the thermal management plate 20 covers one opening of the frame 10, such that the thermal management plate 20 and the frame 10 enclose an accommodating space 101, and the battery cell 200 is disposed in the accommodating space 101. The frame 10 and the thermal management plate 20 may be in various shapes, for example, the frame 10 and the thermal management plate 20 are each a rectangular parallelepiped, a cylinder, and the like.

A cross-sectional shape of an outer contour of the frame 10 may be rectangular, triangular, circular, pentagonal, and the like, and the frame 10 may be made of low-carbon steel, low-alloy steel or stainless steel, so as to obtain good welding performance. Certainly, the frame 10 may also be made of an aluminum material to reduce the weight of the battery case 100.

The thermal management plate 20 is configured to perform temperature adjustment on the battery cell 200. In some embodiments, the thermal management plate 20 is welded to the frame 10, where the welding manner between the thermal management plate 20 and the frame 10 may be friction stir welding, arc welding, laser welding, etc., which is not limited herein. In this way, the thermal management plate 20 and the frame 10 can be tightly connected by welding, thereby strengthening the overall structure of the case, and at the same time, since the thermal management plate 20 and the frame 10 are connected as a whole by welding, the sealing performance between the thermal management plate and the frame can also be significantly improved.

A heat exchange flow channel 201 is disposed in the thermal management plate 20, and the heat exchange flow channel 201 includes a water inlet/outlet portion 2011, and the water inlet/outlet portion 2011 is configured to allow a heat exchange medium to flow in or flow out. In the thermal management plate 20, the area where the water inlet/outlet portion 2011 is located is the water inlet/outlet area.

Exemplarily, during the charging and discharging process of the battery cell 200, the battery cell 200 may generate a large amount of heat, and in order to reduce the risk of thermal runaway of the battery cell 200, a low-temperature medium may be disposed in the thermal management plate 20, and the thermal management plate 20 is configured to exchange heat with the battery cell 200 to remove the heat accumulated in the battery cell 200 in time, so as to reduce the temperature of the battery cell 200. When the ambient temperature of the battery case 100 is low, in order to ensure the normal operation of the battery cell 200, a high-temperature medium may be disposed in the thermal management plate 20, and the thermal management plate 20 is configured to exchange heat with the battery cell 200 to appropriately increase the temperature of the battery cell 200 and ensure the normal operation of the battery cell.

The current collector 30 is fixed to a side of the thermal management plate 20 facing the frame 10, and the current collector 30 may be fixed to the thermal management plate 20 by welding or the like, or may be integrally formed with the thermal management plate 20. The current collector 30 is provided with a converging flow channel 321 in communication with the water inlet/outlet portion 2011, and the current collector 30 is configured to introduce the heat exchange medium into the thermal management plate 20 through the converging flow channel 321, and/or to discharge the heat exchange medium in the thermal management plate 20 through the converging flow channel 321. It may be understood that the water inlet/outlet portion 2011 is located at an edge of the thermal management plate 20, and the current collector 30 is connected to the water inlet/outlet area where the water inlet/outlet portion 2011 is located.

The current collector 30 is disposed on the outer side of the accommodating space 101, which can prevent the leaked heat exchange medium from flowing into the accommodating space 101 due to the leakage of the heat exchange medium in the current collector 30, thereby enhancing the safety and reliability of the battery.

The current collector 30 is welded to the frame 10, and the position of the thermal management plate 20 corresponding to the current collector 30 does not need to be welded to the frame 10, that is, the water inlet/outlet area of the thermal management plate 20 does not need to be directly welded to the frame 10, and does not need to be connected by fasteners such as bolts, and the water inlet/outlet area can be hermetically connected to the frame 10 by welding the current collector 30 to the frame 10.

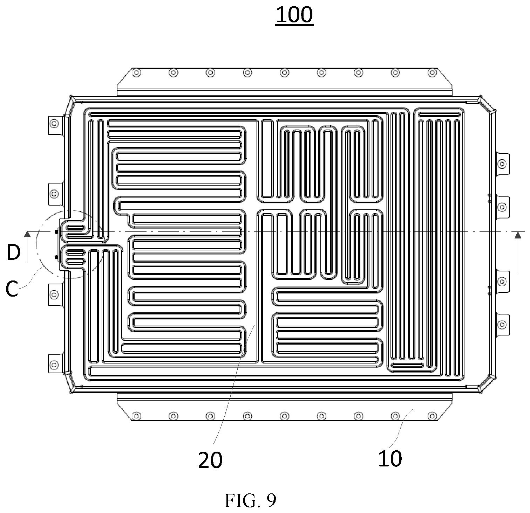

Referring to FIG. 9, FIG. 10, FIG. 13 and FIG. 14, a first welding mark 40 is formed between the thermal management plate 20 and the frame 10, a second welding mark 50 is formed between the current collector 30 and the frame 10, and the first welding mark 40 is connected to the second welding mark 50.

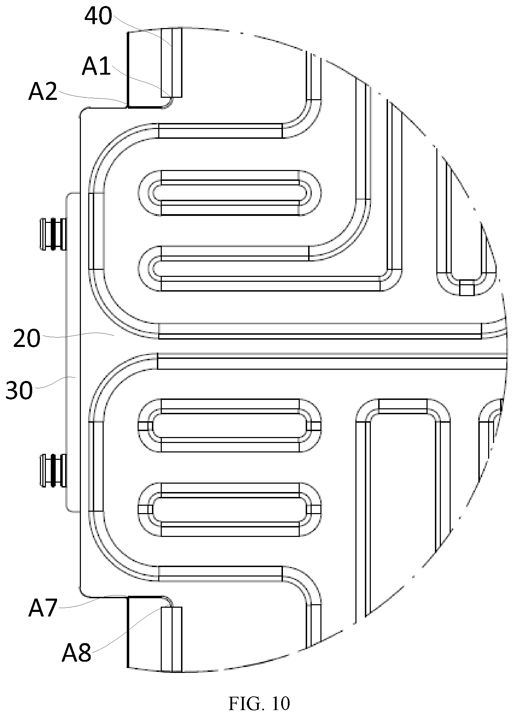

As shown in FIGS. 9 and 10, the first welding mark 40 is formed at an interface between the thermal management plate 20 and the frame 10, and welding points A1 and A8 in FIG. 10 are located within the first welding mark 40. The welding points A1 and A8 are located at a junction of the frame 10 and the thermal management plate 20, for example, the welding points A1 and A8 are respectively located at opposite ends of the current collector 30 and are disposed adjacent to the current collector 30. It may be understood that the first welding mark 40 is disposed along the edge of the thermal management plate 20, such that the edge of the thermal management plate 20 except for the current collector 30 can be welded to the frame 10.

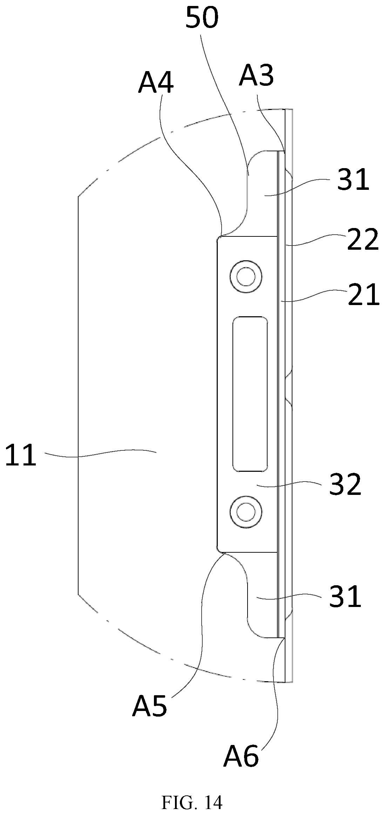

As shown in FIG. 9, FIG. 10, FIG. 13 and FIG. 14, the second welding mark 50 is formed at the interface between the current collector 30 and the frame 10, the welding points A3, A4, A5 and A6 in FIG. 14 are located in the second welding mark 50, and the welding points A2 and A7 are located in both the first welding mark 40 and the second welding mark 50, that is, the welding points A2 and A7 are the connection points of the first welding mark 40 and the second welding mark 50.

Exemplarily, the welding points A2 and A7 are located at the junction of the thermal management plate 20, the current collector 30 and the frame 10, and the welding points A2 and A7 are respectively located at two opposite ends of the current collector 30. Exemplarily, the welding points A3, A4, A5, and A6 are located at the junction of the frame 10 and the current collector 30, exemplarily, the welding point A3 is located at the edge of the current collector 30 close to the thermal management plate 20, the welding points A4 and A5 are located at the edge of the current collector 30 away from the thermal management plate 20, the welding point A6 is located at the edge of the current collector 30 close to the thermal management plate 20, and the second welding mark 50 is continuously or discontinuously disposed along A2 to A7.

During welding, the thermal management plate 20 and the frame 10 are welded and form the first welding mark 40, the current collector 30 and the frame 10 are welded and form the second welding mark 50, and at the welding points A2 to A7, the welding marks are transferred from the thermal management plate 20 to the current collector 30, avoiding the water inlet/outlet portion 2011 at the end of the thermal management plate 20, and realizing the sealed connection between the thermal management plate 20 and the frame 10.

The battery case 100 provided by the embodiment of the present application includes the frame 10, the thermal management plate 20 and the current collector 30, where the thermal management plate 20 is welded to the frame 10 and encloses the accommodating space 101 with the frame 10, the current collector 30 is fixed to the thermal management plate 20 and welded to the frame 10, therefore, the position of the thermal management plate 20 corresponding to the current collector 30 does not need to be directly welded to the frame 10 or fixedly connected by fasteners, and the sealed connection between the water inlet and outlet regions of the thermal management plate 20 and the frame 10 can be realized by welding the current collector 30 to the frame 10, such that the thermal management plate 20 can be hermetically connected to the frame 10, and the battery case 100 has better sealing reliability. In addition, since the current collector 30 is located on the outer side of the accommodating space 101, it is possible to prevent the leaked heat exchange medium from flowing into the accommodating space 101 due to the leakage of the heat exchange medium in the current collector 30, thereby enhancing the safety and reliability of the battery.

In the battery case 100 provided by the embodiment of the present application, the current collector 30 is fixedly connected to the thermal management plate 20 and welded to the frame 10, such that the water inlet/outlet area where the water inlet/outlet portion 2011 of the thermal management plate 20 is located does not need to be directly welded to the frame 10, but is hermetically connected to the frame 10 through the current collector 30, and the remaining area of the thermal management plate 20 is directly welded to the frame 10. Since the first welding mark 40 between the thermal management plate 20 and the frame 10 is connected to the second welding mark 50 between the current collector 30 and the frame 10, the entire thermal management plate 20 is hermetically connected to the frame 10, thereby improving the sealing reliability of the battery case 100; the battery case 100 realizes the connection of the thermal management plate 20 and the frame 10 by welding, without the need to disposing parts such as bolts, sealants, and gaskets, which reduces the number of parts and reduces the manufacturing cost, and also solves the problem of torque attenuation of the bolts under long-term use conditions, thereby further improving the sealing reliability of the battery case 100.

In some embodiments, the first welding mark 40 and the second welding mark 50 form a closed welding mark along the frame 10.

Specifically, the first welding mark 40 extends along the edge of the thermal management plate 20, the second welding mark 50 extends along the edge of the current collector 30, and the first welding mark 40 and the second welding mark 50 jointly enclose a closed annular welding mark, the welding mark extends along the frame 10 and the shape of the welding mark may be adapted to the outer contour shape of the frame 10. In this way, the whole peripheral side formed by the thermal management plate 20 and the current collector 30 can be hermetically connected to the frame 10, and the battery case 100 has better sealing performance.

In some other embodiments, the second welding mark 50 may also extend along a part of the edge of the current collector 30, for example, two sides of the current collector 30 are respectively welded to the frame 10 and form the second welding mark 50, and the middle of the current collector 30 is hermetically connected to the frame 10 through a gasket or a sealant.

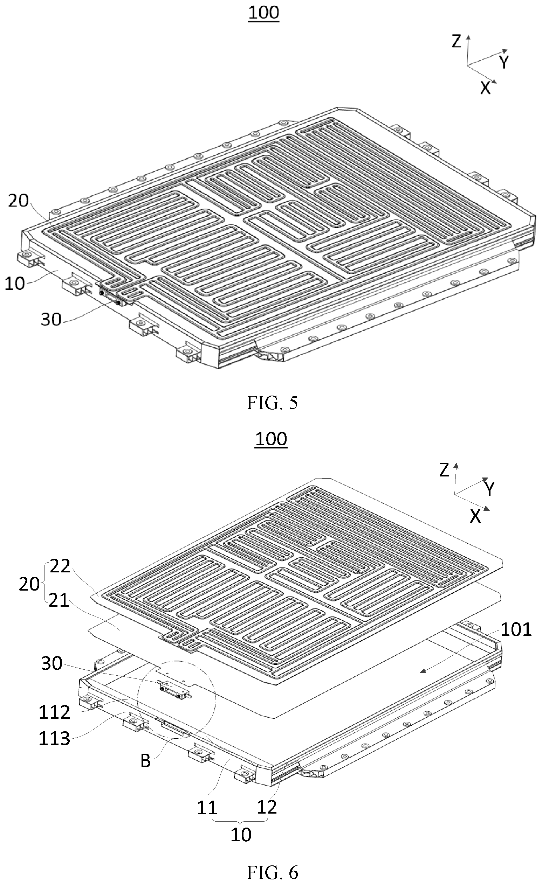

Referring to FIG. 6, FIG. 7, and FIG. 12, in some embodiments, the current collector 30 includes two flange portions 31 and a current collecting portion 32 disposed between the two flange portions 31, the converging flow channel 321 is disposed in the current collecting portion 32, and the two flange portions 31 are both attached to and welded to the frame 10.

Each of the flange portions 31 is configured to be welded to the frame 10, and no flow channel is required to be disposed in each of the flange portions 31. Specifically, each of the flange portions 31 is attached to the frame 10, such that each of the flange portions 31 and the frame 10 are overlapped, to facilitate welding of each of the flange portions 31 and the frame 10. Each of the flange portions 31 may have various shapes, such as a strip shape and an arc shape, as long as each of the flange portions can be welded to the frame 10.

The converging flow channel 321 is disposed in the current collecting portion 32, that is, the current collecting portion 32 is configured to be connected to the thermal management plate 20 and the converging flow channel 321 is in communication with the heat exchange flow channel 201, and the converging flow channel 321 is configured to introduce the heat exchange medium into the heat exchange flow channel 201 or discharge the heat exchange medium in the heat exchange flow channel 201. The current collecting portion 32 may also be welded to the frame 10 to improve the sealing performance, and in other embodiments, the current collecting portion 32 may also be attached to the frame 10, rather than welded. The shape of the current collecting portion 32 may be various, such as a rectangular shape and a cylindrical shape. The current collecting portion 32 may be integrally formed with each of the flange portions 31 to improve the sealing of the current collector 30, and the current collecting portion 32 may also be fixedly connected to each of the flange portions 31 by welding or the like.

By adopting the above technical solution, the current collecting portion 32 in the current collector 30 can be in communication with the thermal management plate 20, and each of the flange portions 31 can facilitate welding of the current collector 30 to the frame 10, and the structure of the current collector 30 can simultaneously meet the requirements for the inlet and outlet of heat exchange medium and welding, featuring an ingenious and practical design.

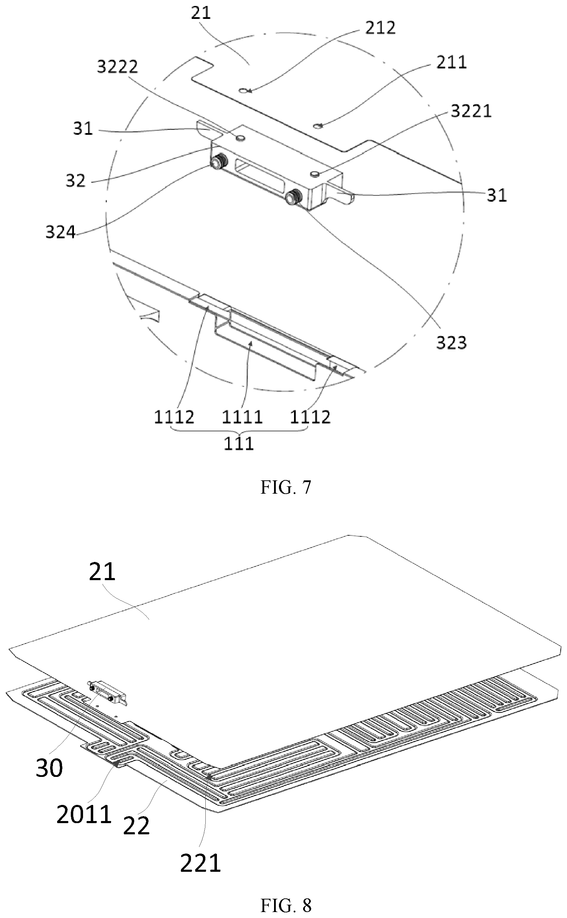

Referring to FIG. 6 and FIG. 7, in some embodiments, the frame 10 is provided with a mounting groove 111, the current collecting portion 32 is disposed in the mounting groove 111, and each of the flange portions 31 is disposed in the mounting groove 111 or disposed on an outer side of the frame 10 away from the accommodating space 101.

Specifically, the current collecting portion 32 may be completely accommodated in the mounting groove 111, or may be partially accommodated in the mounting groove 111, that is, the current collecting portion 32 protrudes from a side of the mounting groove 111 away from the accommodating space 101. Since the thermal management plate 20 covers the frame 10, and the current collecting portion 32 is in communication with the thermal management plate 20, the mounting groove 111 is formed in the frame 10 and the current collecting portion 32 is disposed in the mounting groove 111, on the one hand, the current collecting portion 32 is disposed on the outer side of the accommodating space 101 to avoid the heat exchange medium leakage from affecting the battery cell 200, and on the other hand, the thermal management plate 20 and the current collecting portion 32 do not need to extend to a longer length toward the outer side of the frame 10 to avoid increasing the size of the battery case 100.

Each of the flange portions 31 may be disposed in the mounting groove 111, and in this case, each of the flange portions 31 is welded to the frame 10 by welding each of the flange portions 31 to a side wall of the mounting groove 111. Each of the flange portions 31 may also be disposed on the outer side of the frame 10, and each of the flange portions 31 is attached to the outer surface of the frame 10, at this time, each of the flange portions 31 and the outer surface of the frame 10 are welded to realize the welding connection between each of the flange portions 31 and the frame 10, and each of the flange portions 31 can also play a role in limiting the position of the thermal management plate 20, which is beneficial to realizing the alignment of the thermal management plate 20 and the frame 10.

By adopting the above technical solution, the current collecting portion 32 is disposed in the mounting groove 111 of the frame 10, and the current collecting portion 32 can be disposed outside the accommodating space 101, so as to avoid the heat exchange medium leakage from affecting the battery cell 200. Each of the flange portions 31 may be disposed in the mounting groove 111 or on the outer side of the frame 10, and both may realize the overlapping of each of the flange portions 31 and the frame 10, so as to perform welding at the interface between each of the flange portions and the frame.

Referring to FIG. 6 to FIG. 14, the frame 10 includes a first frame beam 11 extending in a first direction X and a second frame beam 12 extending in a second direction Y, the first direction X intersects with the second direction Y, the first frame beam 11 is connected to the second frame beam 12, the mounting groove 111 is disposed in the first frame beam 11, and the first frame beam 11 includes a top surface 112 and an outer side surface 113. A part of the first welding mark 40 is located between the thermal management plate 20 and the top surface 112, and the second welding mark 50 is located between the current collector 30 and the outer side surface 113.

The first frame beam 11 extends in the first direction X, and the two flange portions 31 are respectively disposed on two opposite sides of the current collecting portion 32 in the first direction X, to facilitate connection of the first frame beam 11.

A plurality of first frame beams 11 and a plurality of second frame beams 12 may be disposed, respectively, for example, two first frame beams and two second frame beams, and the first frame beams 11 and the second frame beams 12 jointly enclose a structure of the frame 10. The first frame beam 11 may be a beam body in the width direction of the frame 10, but is not limited thereto. The top surface 112 of the first frame beam 11 refers to a surface of the first frame beam 11 facing the thermal management plate 20. The outer side surface 113 of the first frame beam 11 refers to a surface of the first frame beam 11 facing away from the accommodating space 101.

The mounting groove 111 is formed in the first frame beam 11, such that the current collector 30 is disposed on the first frame beam 11. The thermal management plate 20 is welded to the top of the first frame beam 11 and the top of the second frame beam 12 and forms the first welding mark 40, such that a part of the first welding mark 40 is located between the top surface 112 of the first frame beam 11 and the thermal management plate 20, and the first welding mark 40 includes welding points A1 and A8. The current collector 30 is welded to the outer side surface 113 of the first frame beam 11 and forms the second welding mark 50, and the second welding mark 50 includes welding points A2 to A7.

By adopting the above technical solution, the thermal management plate 20 is welded to the top of the first frame beam 11 and the top of the second frame beam 12, and the current collector 30 is welded to the outer side surface 113 of the first frame beam 11 in the water inlet/outlet area of the thermal management plate 20, such that the welding mark avoids the water inlet/outlet flow channel of the thermal management plate 20, and the sealed connection between the thermal management plate 20 and the frame 10 is realized.

In some embodiments, the second welding mark 50 continuously extends along one flange portion 31, the current collecting portion 32 and the other flange portion 31, and the first welding mark 40 and the second welding mark 50 enclose a closed welding mark along the frame 10.

As shown in FIG. 10 to FIG. 14, the first welding mark 40 includes welding points A1 and A8. The two flange portions 31 and the current collecting portion 32 are both welded to the first frame beam 11, the second welding mark 50 extends along the welding points A2, A3, A4, A5, A6, and A7, and the second welding mark 50 has the intersection points A2 and A7 with the first welding mark 40, that is, the first welding mark 40 and the second welding mark 50 are connected and form a closed welding mark on the frame 10.

By adopting the above technical solution, the current collecting portion 32 and the flange portion 31 are both welded to the frame 10, and the thermal management plate 20 and the current collector 30 are respectively welded to the frame 10 and form a closed welding mark, such that the heat management component formed by the thermal management plate 20 and the current collector 30 can be fixedly and hermetically connected to the frame 10, and the battery case 100 has better sealing performance.

Referring to FIG. 3 to FIG. 5 and FIG. 8, in some embodiments, the thermal management plate 20 includes a main body portion 20a and a protruding portion 20b disposed on one side of the main body portion 20a, the main body portion 20a covers the frame 10, and the protruding portion 20b is attached to the first frame beam 11. The water inlet/outlet portion 2011 is located in the protruding portion 20b, and the current collector 30 is fixedly connected to the protruding portion 20b. In the first direction X, each of the flange portions 31 is flush with an edge of the protruding portion 20b or each of the flange portions 31 exceeds the edge of the protruding portion 20b.

The main body portion 20a covers the frame 10 to jointly enclose the accommodating space 101 with the frame 10, and the protruding portion 20b protrudes from one side of the main body portion 20a and covers the mounting groove 111. Since the water inlet/outlet portion 2011 is located in the protruding portion 20b, the protruding portion 20b is also a water inlet/outlet area of the thermal management plate 20. As shown in FIG. 5 and FIG. 10, each of the flange portions 31 is flush with the edge of the protruding portion 20b, and the intersection point A2 of the first welding mark 40 and the second welding mark 50 is located on the protruding portion 20b and each of the flange portions 31 at the same time. In another embodiment, each of the flange portions 31 exceeds the edge of the protruding portion 20b, and the intersection of the first welding mark 40 and the second welding mark 50 may be located on the main body portion 20a and each of the flange portions 31 at the same time.

By disposing the protruding portion 20b on the thermal management plate 20, the current collector 30 can be mounted by using the protruding portion 20b, and the thermal management plate 20 does not need to be disposed to a long length as a whole, thereby saving the material of the thermal management plate 20. By setting each of the flange portions 31 to be flush with the edge of the protruding portion 20b or each of the flange portions 31 exceeding the edge of the protruding portion 20b, it is convenient to realize the connection between the first welding mark 40 and the second welding mark 50 to form a closed welding mark.

As shown in FIG. 7, the mounting groove 111 includes a first groove 1111 and two second grooves 1112 that are in communication with each other, and the first groove 1111 is disposed between the two second grooves 1112; the current collecting portion 32 is disposed in the first groove 1111, and each of the flange portions 31 is disposed in the second groove 1112.

Optionally, the first groove 1111 is provided with a notch facing the top surface 112 of the first frame beam 11 and a notch facing the outer side surface 113 of the first frame beam 11; the second groove 1112 is provided with a notch facing the top surface 112 of the first frame beam 11.

The first groove 1111 is configured to accommodate the current collecting portion 32, and the second groove 1112 is configured to accommodate the flange portion 31, such that the current collector 30 can be mounted in the mounting groove 111 of the frame 10, thereby reducing the volume of the battery case 100. The first groove 1111 is provided with a notch facing the top surface 112 of the first frame beam 11 and a notch facing the outer side surface 113 of the first frame beam 11, the top of the current collecting portion 32 is connected to the thermal management plate 20, and the side of the current collecting portion 32 can be connected to an external heat exchange medium source. The notch of the second groove 1112 faces the top surface 112 of the first frame beam 11, such that each of the flange portions 31 can be connected to the thermal management plate 20. Optionally, the second groove 1112 may also be provided with a notch facing the outer side surface 113 of the first frame beam 11.

Optionally, since each of the flange portions 31 does not need to be provided with a flow channel, the thickness of each of the flange portions 31 may be less than the thickness of the current collector 30, and correspondingly, the width of the second groove 1112 in the second direction Y is less than the width of the first groove 1111 in the second direction Y.

By adopting the above technical solution, the mounting groove 111 can accommodate the current collector 30 without affecting the connection between the current collector 30 and the thermal management plate 20 and the connection between the current collector 30 and the external heat exchange medium source.

Referring to FIG. 6, FIG. 15, and FIG. 16, in some embodiments, a side of each of the flange portions 31 close to the accommodating space 101 is provided with a limiting surface 311, and the limiting surface 311 is attached to a groove wall of the second groove 1112 close to the accommodating space 101.

Specifically, in the second direction Y, the thickness of each of the flange portions 31 is less than the width of the second groove 1112, so as to facilitate the arrangement of each of the flange portions 31 in the second groove 1112.

During assembly, the current collector 30 is fixedly connected to the thermal management plate 20 to form a thermal management component, and then the thermal management plate 20 covers the frame 10, and the current collector 30 is accommodated in the mounting groove 111. The limiting surface 311 of each of the flange portions 31 is attached to the groove wall of the second groove 1112, such that the current collector 30 and the frame 10 can be positioned, and at the same time, since the current collector 30 is fixedly connected to the thermal management plate 20, the positioning of the thermal management plate 20 and the frame 10 is also realized, such that the thermal management component has a high alignment accuracy, which is beneficial to welding the thermal management component and the frame 10.

It may be understood that, in order to realize the positioning function by using the limiting surface 311, the limiting surface 311 may be a plane. Alternatively, the limiting surface 311 and the groove wall of the second groove 1112 are respectively provided with a limiting protrusion and a limiting groove, which can also realize mutual alignment.

In the embodiment of the present application, the limiting surface 311 of each of the flange portions 31 is attached to the groove wall of the second groove 1112, such that the current collector 30 can be aligned with the frame 10, and the thermal management plate 20 can be aligned with the frame 10.

In other embodiments, the limiting surface 311 may also be disposed as a surface of each of the flange portions 31 facing away from the accommodating space 101, and at this time, the limiting surface 311 is attached to a groove wall of the second groove 1112 facing away from the accommodating space 101 to position the current collector 30.

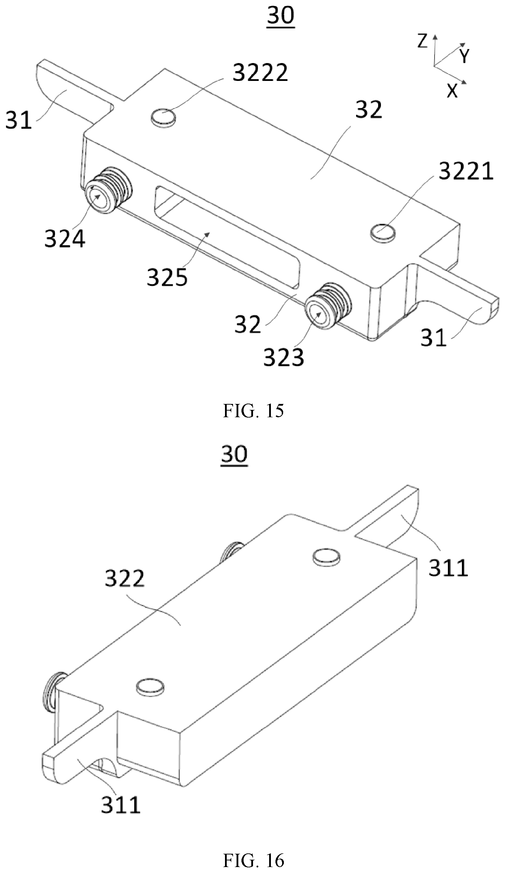

Referring to FIG. 15, in some embodiments, the current collector 30 is provided with a weight reduction hole. Optionally, the current collecting portion 32 is provided with a weight reduction hole 3255.

The shape of the weight reduction hole 3255 may be square, circular, etc., and one or more weight reduction hole 3255 may be formed. The current collector 30 provided in the embodiment of the present application is of a special-shaped structure, and by forming the weight reduction hole 3255 in the current collector 30, the weight of the current collector 30 can be reduced on the basis of achieving the welding of the current collector 30 and the frame 10, which is beneficial to reducing the weight of the entire battery case 100.

In some embodiments, the current collector 30 is provided with an bonding surface 322 in the height direction of the battery case 100, and the bonding surface 322 is attached and welded to the thermal management plate 20. Optionally, the bonding surface 322 is disposed on the current collecting portion 32.

The height direction of the battery case 100 is the arrangement direction of the thermal management plate 20 and the frame 10, and in the embodiment of the present application, the height direction of the battery case 100 is a third direction Z. The bonding surface 322 and the surface of the thermal management plate 20 facing the frame 10 are both flat surfaces to facilitate welding.

In the embodiment of the present application, the current collector 30 is attached and welded to the thermal management plate 20 through the bonding surface 322, which can improve the sealing performance between the current collector 30 and the thermal management plate 20, and prevent the heat exchange medium from leaking from between the bonding surface 322 and the thermal management plate 20. The welding process is simple, which facilitates manufacturing.

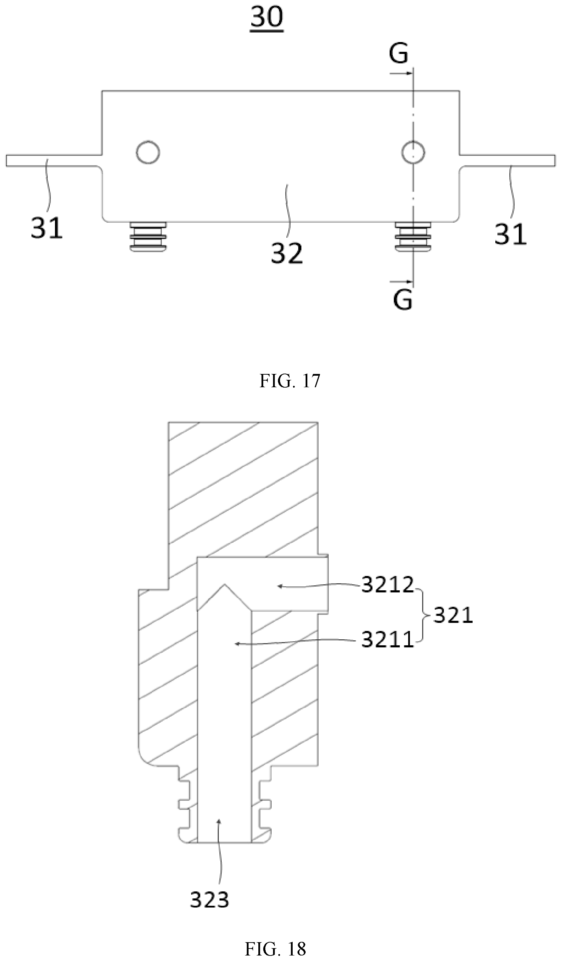

Referring to FIG. 7, FIG. 11, FIG. 12, and FIG. 15 to FIG. 18, two converging flow channels 321 are spaced apart in the current collector 30, and the current collecting portion 32 of the current collector 30 is further provided with a first inlet 323 and a first outlet 324. A second inlet 211 and a second outlet 212 are formed in the thermal management plate 20, the first inlet 323, one converging flow channel 321 and the second inlet 211 are in communication sequentially, and the second outlet 212, the other converging flow channel 321 and the second outlet 212 are in communication sequentially.

The two converging flow channels 321 are respectively a feeding flow channel and a discharging flow channel, and the first inlet 323, one converging flow channel 321 (feeding flow channel) and the second inlet 211 are in communication sequentially to realize that the heat exchange medium provided by the external heat exchange medium source flows into the thermal management plate 20. The second outlet 212, the other converging flow channel 321 (the discharging flow channel) and the second outlet 212 are in communication sequentially to realize the outflow of the heat exchange medium source in the thermal management plate 20. It may be understood that, in other embodiments, the feeding current collector 30 and the discharging current collector 30 may also be disposed separately.

The current collector 30 provided by the embodiment of the present application integrates two converging flow channels 321, which can realize the inflow and outflow of the heat exchange medium at the same time, and compared with the manner of separately disposing the feeding current collector 30 and the discharging current collector 30, the number of parts is reduced, and the welding difficulty is reduced.

In some embodiments, the current collector 30 is provided with a liquid inlet pipe 3221 and a liquid outlet pipe 3222, the liquid inlet pipe 3221 is in communication with the first inlet 323 through one converging flow channel 321, and the liquid outlet pipe 3222 is in communication with the first outlet 324 through the other converging flow channel 321. The liquid inlet pipe 3221 is inserted into the second inlet 211, and the liquid outlet pipe 3222 is inserted into the second outlet 212.

Optionally, the liquid inlet pipe 3221 and the liquid outlet pipe 3222 are disposed on the bonding surface 322 in a protruding manner, and since the bonding surface 322 is attached to the thermal management plate 20, the liquid inlet pipe 3221 and the liquid outlet pipe 3222 are disposed on the bonding surface 322 in a protruding manner, which can not only realize the communication between the flow channels, but also can use the protruded pipe body to align the thermal management plate 20 with the current collector 30, thereby improving the alignment accuracy between the thermal management plate 20 and the current collector 30, and further reducing the risk of heat exchange medium leakage.

Referring to FIG. 6 to FIG. 12 and FIG. 18, the converging flow channel 321 includes a first flow channel portion 3211 and a second flow channel portion 3212 that are in communication with each other, the first flow channel portion 3211 is parallel to the thermal management plate 20, and the second flow channel portion 3212 intersects with the thermal management plate 20.

Optionally, the first flow channel portion 3211 extends in the second direction Y, and the second flow channel part 3212 extends in the height direction of the battery case 100 (that is, the third direction Z), that is, the second flow channel portion 3212 perpendicularly intersects with the thermal management plate 20. In other embodiments, the second flow channel portion 3212 may also be disposed obliquely to the thermal management plate 20.

The converging flow channel 321 in this embodiment of the present application includes two flow channel portions that are connected in a bent manner and that are in communication with each other, such that drainage can be implemented in a relatively small space, and a structure is ingenious.

In addition, when the current collecting portion 32 is welded to the frame 10, the welding mark between the current collecting portion 32 and the frame 10 needs to avoid the converging flow channel 321, that is, the converging flow channel 321 is spaced apart from the lower edge of the current collecting portion 32 away from the thermal management plate 20, and in this case, the second welding mark 50 does not affect the converging flow channel 321.

The arrangement direction of the first inlet 323 and the first outlet 324 is parallel to the length direction, the width direction, or the height direction of the frame 10.

The width direction of the frame 10 is the first direction X, the length direction thereof is the second direction Y, and the height direction thereof is the third direction Z. Referring to FIG. 3 to FIG. 18, in some embodiments, the arrangement direction of the first inlet 323 and the first outlet 324 is parallel to the width direction (the first direction X) of the frame 10. In this case, the two converging flow channels 321 each include a first flow channel portion 3211 and a second flow channel portion 3212, the two first flow channel portions 3211 are spaced apart in the width direction of the frame 10, and the two second flow channel portions 3212 are also spaced apart in the width direction of the frame 10.

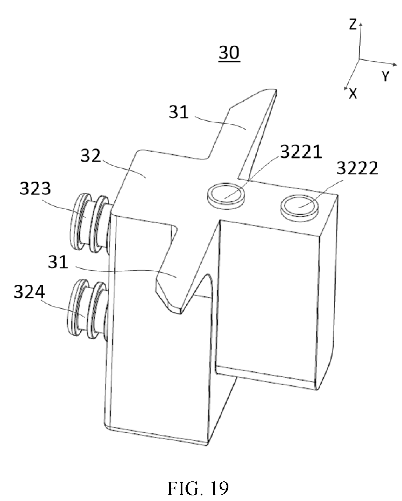

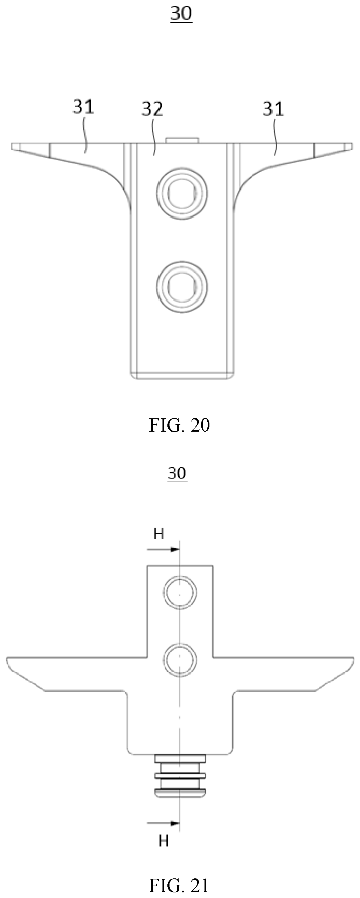

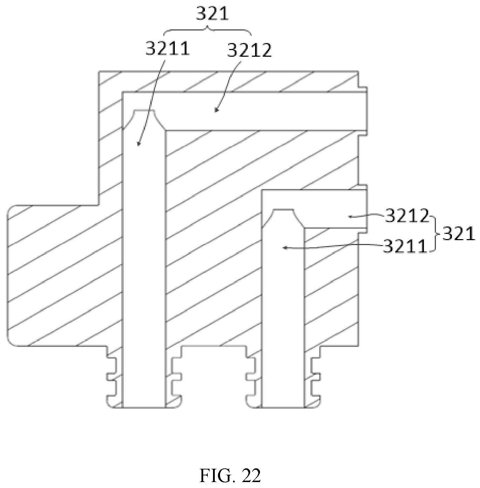

Referring to FIG. 3 and FIG. 19 to FIG. 22, in some other embodiments, the arrangement direction of the first inlet 323 and the first outlet 324 is parallel to the height direction (the third direction Z), to reduce the size of the current collector 30 in the width direction of the frame 10. In this case, the two converging flow channels 321 each include a first flow channel portion 3211 and a second flow channel portion 3212, the two first flow channel portions 3211 are spaced apart in the height direction of the frame 10, and the two second flow channel portions 3212 are spaced apart in the length direction of the frame 10.

It may be understood that, in other embodiments, the arrangement direction of the first inlet 323 and the first outlet 324 may also be parallel to the length direction of the frame 10, and in this case, the current collector 30 may be disposed on the second frame beam 12.

The inlet, the outlet, and the converging flow channel 321 may be flexibly designed for the current collector 30 in the embodiment of the present application based on an installation space, to meet requirements of different frames 10, and the design manner is flexible and easy to implement.

Referring to FIG. 6 and FIG. 8, the thermal management plate 20 includes a first plate 21 and a second plate 22 that are stacked and welded, a surface of the second plate 22 facing the first plate 21 is provided with a flow channel groove 221, the flow channel groove 221 and the first plate 21 jointly form a heat exchange flow channel 201, the first plate 21 is welded to the frame 10, and the current collector 30 is fixedly connected to a side of the first plate 21 away from the second plate 22.

The first plate 21 and the second plate 22 may both be plate-shaped, and the first plate 21 and the second plate 22 are attached and connected. In other embodiments, one of the first plate 21 and the second plate 22 is frame-shaped and the other one is plate-shaped. The first plate 21 and the second plate 22 may be made of a metal, such as aluminum, copper, and steel. The first plate 21 and the second plate 22 may also be made of plastic or other materials.

The first plate 21 and the second plate 22 may be fixedly connected by welding, or may be fixedly connected by other means. In some embodiments, the first plate 21 and the second plate 22 are welded together by a welding agent, and the welding agent may be a flux or the like.

A surface of the second plate 22 facing the first plate 21 is concavely provided with a flow channel groove 221, the flow channel groove 221 shown in FIG. 8 is only an example, and a structure of the flow channel groove 221 is not limited thereto. Only one flow channel groove 221 may be formed, or the flow channel groove 221 includes a plurality of sub-flow channel grooves, and the plurality of sub-flow channel grooves are connected in series and/or in parallel. During use, the first plate 21 and the second plate 22 enclose a closed cavity, a flow channel is disposed in the cavity, and the heat exchange medium can circulate in the flow channel.

The current collector 30 is fixedly connected to a side of the first plate 21 away from the second plate 22, and the first plate 21 may be a flat plate to facilitate fixation of the current collector 30. The second inlet 211 and the second outlet 212 are both disposed on the first plate 21.

The thermal management plate 20 provided in this embodiment of the present application forms a closed cavity and a flow channel by using the first plate 21 and the second plate 22, to facilitate a heat exchange medium to flow in the thermal management plate 20. The current collector 30 is connected to the first plate 21, which facilitates fixation of the current collector 30 on the thermal management plate 20 and welding of the current collector 30 to the frame 10.

In another embodiment, the channel groove 221 may also be disposed on the first plate 21.

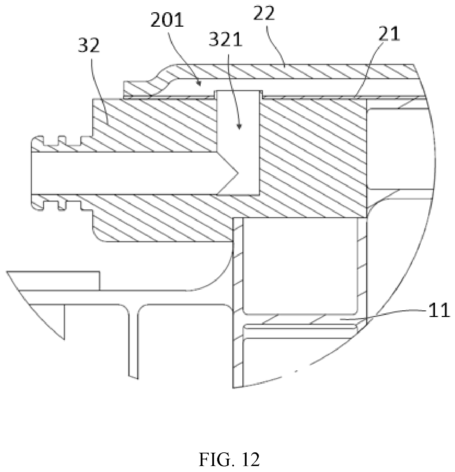

Referring to FIG. 7 and FIG. 12, a thickness of the current collector 30 is greater than a thickness of the first plate 21. The thickness of the current collector 30 and the thickness of the first plate 21 are both the maximum value of the thickness in the height direction (the third direction Z) of the battery case 100.

Since the current collector 30 is welded to the first plate 21, the thickness of the current collector 30 is set to be greater than the thickness of the first plate, such that the current collector 30 can be used to form a sufficient penetration depth, thereby avoiding the welding from affecting the heat exchange flow channel 201 in the thermal management plate 20.

Optionally, the thickness of the current collector 30 is more than twice the thickness of the first plate 21, but is not limited thereto.

Optionally, the thickness of the current collector 30 is greater than the overall thickness of the thermal management plate 20. Since the current collector 30 is separately welded to the frame 10, the thickness of the current collector 30 can be flexibly set.

Referring to FIG. 2 to FIG. 22, some embodiments of the present application provide a battery case 100, including a frame 10, a thermal management board 20, and a current collector 30, where the thermal management plate 20 and the frame 10 enclose an accommodating space 101, the current collector 30 is fixed to a side of the thermal management plate 20 facing the frame 10 and is disposed on an outer side of the accommodating space 101, the thermal management plate 20 and the frame 10 are welded to form a first welding mark 40, the current collector 30 and the frame 10 are welded to form a second welding mark 50, and the first welding mark 40 is connected to the second welding mark 50. A mounting groove 111 is formed in the frame 10, the current collector 30 is disposed in the mounting groove 111 and includes two flange portions 31 and a current collecting portion 32 disposed between the two flange portions 31, and the second welding mark 50 extends along an edge of the current collector 30.

In the battery case 100 in this embodiment of this application, the current collector 30 is welded to the frame 10, and the area of the thermal management plate 20 other than the area connected to the current collector 30 is welded to the frame 10, such that the heat management component is welded to the frame 10, thereby improving the sealing performance of the battery case 100. The battery case 100 does not need to connect the thermal management plate 20 and the frame 10 by bolts, which saves parts and procedures and improves the sealing reliability, and the current collector 30 is disposed outside the accommodating space 101 to realize the external connection of a joint, which reduces the risk of the current collector 30 leaking the heat exchange medium into the accommodating space 101 and improves the reliability of the battery.

A second aspect of the present application provides a battery 1000, including a battery case 100 and a battery cell 200. The battery cell 200 is accommodated in the battery case 100.

A third aspect of the present application provides an electrical device, including the battery 1000 in the second aspect. The battery 1000 is configured to provide electric energy to the electrical device.

The electrical device may be any one of the above devices or systems using the battery.

It should be noted that, without contradictory, the embodiments in the present application may be combined with the features in the embodiments.

The above embodiments are only used to illustrate the technical solutions of the present application, rather than limiting the same; although the present application has been described in detail with reference to the above embodiments, those of ordinary skill in the art should understand that: they can still make modifications on the technical solutions described in the above embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application.

## Claims

1. A battery case, comprising:
a frame;
a thermal management plate welded to the frame, the thermal management plate and the frame enclosing an accommodating space, wherein a heat exchange flow channel for a heat exchange medium to flow is disposed in the thermal management plate, and the heat exchange flow channel comprises a water inlet/outlet portion; and
a current collector fixedly connected to the thermal management plate and disposed on an outer side of the accommodating space, wherein a converging flow channel in communication with the water inlet/outlet portion is disposed in the current collector, and the current collector is welded to the frame;
wherein a first welding mark is formed between the thermal management plate and the frame, a second welding mark is formed between the current collector and the frame, and the first welding mark is connected to the second welding mark.

2. The battery case according to claim 1, wherein the current collector comprises two flange portions and a current collecting portion disposed between the two flange portions, the converging flow channel is disposed in the current collecting portion, and the two flange portions are both attached to and welded to the frame.

3. The battery case according to claim 2, wherein the frame is provided with a mounting groove, the current collecting portion is disposed in the mounting groove, and each of the flange portions is disposed in the mounting groove or on an outer side of the frame away from the accommodating space.

4. The battery case according to claim 3, wherein the frame comprises a first frame beam extending in a first direction and a second frame beam extending in a second direction, the first direction intersects with the second direction, the first frame beam is connected to the second frame beam, the mounting groove is disposed in the first frame beam, and the first frame beam comprises a top surface and an outer side surface; and
a part of the first welding mark is located between the thermal management plate and the top surface, and the second welding mark is located between the current collector and the outer side surface.

5. The battery case according to claim 4, wherein the second welding mark extends continuously along one of the flange portions, the current collecting portion, and the other one of the flange portions, and the first welding mark and the second welding mark enclose a closed welding mark along the frame.

6. The battery case according to claim 4 or 5, wherein the thermal management plate comprises a main body portion and a protruding portion protruding from one side of the main body portion, the main body portion covers the frame, and the protruding portion is attached to the first frame beam; the water inlet/outlet portion is located in the protruding portion, and the current collector is fixedly connected to the protruding portion; and
in the first direction, each of the flange portions is flush with an edge of the protruding portion or the flange portions exceed the edge of the protruding portion.

7. The battery case according to any one of claims 3 to 6, wherein the mounting groove comprises a first groove and two second grooves that are in communication with each other, and the first groove is disposed between the two second grooves;
the current collecting portion is disposed in the first groove; and
each of the flange portions is disposed in the second groove.

8. The battery case according to claim 7, wherein a side of each of the flange portions close to the accommodating space is provided with a limiting surface, and the limiting surface is attached to a groove wall of the second groove close to the accommodating space.

9. The battery case according to any one of claims 1 to 8, wherein a weight reduction hole is formed in the current collector.

10. The battery case according to any one of claims 1 to 9, wherein the current collector is provided with a bonding surface in a height direction of the battery case, and the bonding surface is bonded and welded to the thermal management plate.

11. The battery case according to any one of claims 1 to 10, wherein two converging flow channels are disposed in the current collector at intervals, and the current collector is further provided with a first inlet and a first outlet; and
the thermal management plate is provided with a second inlet and a second outlet, the first inlet, one of the converging flow channels, and the second inlet are in communication sequentially, and the second outlet, the other one of the converging flow channels, and the second outlet are in communication sequentially.

12. The battery case according to claim 11, wherein the current collector is provided with a liquid inlet pipe and a liquid outlet pipe in a protruding manner, the liquid inlet pipe is in communication with the first inlet through one of the converging flow channels, and the liquid outlet pipe is in communication with the first outlet through the other one of the converging flow channels; and the liquid inlet pipe is inserted into the second inlet, and the liquid outlet pipe is inserted into the second outlet.

13. The battery case according to claim 11 or 12, wherein an arrangement direction of the first inlet and the first outlet is parallel to a length direction, a width direction, or a height direction of the frame.

14. The battery case according to any one of claims 1 to 13, wherein each of the converging flow channels comprises a first flow channel portion and a second flow channel portion that are in communication with each other, the first flow channel portion is parallel to the thermal management plate, and the second flow channel portion intersects with the thermal management plate.

15. The battery case according to any one of claims 1 to 14, wherein the thermal management plate comprises a first plate and a second plate that are stacked and welded to each other, a flow channel groove is formed in a surface of the second plate facing the first plate, the flow channel groove and the first plate jointly form the heat exchange flow channel, the first plate is welded to the frame, and the current collector is fixedly connected to a side of the first plate away from the second plate.

16. The battery case according to claim 15, wherein a thickness of the current collector is greater than a thickness of the first plate.

17. A battery, comprising:
the battery case according to any one of claims 1 to 16; and
a battery cell accommodated in the battery case.

18. An electrical device, comprising the battery according to claim 17, wherein the battery is configured to provide electrical energy to the electrical device.
